(19) Europäisches Patentamt
European Patent Office
Office européen des brevets

(11) **EP 3 217 080 B1**

(12) **FASCICULE DE BREVET EUROPÉEN**

(45) Date de publication et mention de la délivrance du brevet:
**16.12.2020 Bulletin 2020/51**

(51) Int Cl.:
*F21V 8/00* *(2006.01)*

(21) Numéro de dépôt: **17158510.2**

(22) Date de dépôt: **28.02.2017**

(54) **GUIDE OPTIQUE AVEC MOYENS OPTIQUES DE DISPERSION DE LA LUMIERE**

LICHTWELLENLEITER MIT OPTISCHEN MITTELN ZUR LICHTDISPERSION

OPTICAL GUIDE WITH OPTICAL MEANS OF LIGHT DISPERSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.03.2016 FR 1652032**

(43) Date de publication de la demande:
**13.09.2017 Bulletin 2017/37**

(73) Titulaire: **Valeo Vision**
**93012 Bobigny Cedex (FR)**

(72) Inventeurs:
- **GODBILLON, Vincent**
  **75011 PARIS (FR)**
- **SAGNA, Boubacar**
  **93012 Bobigny (FR)**

(56) Documents cités:
**WO-A2-2015/086925     US-A1- 2006 083 028**
**US-A1- 2014 176 875**

EP 3 217 080 B1

**Description**

L'invention a trait au domaine de l'éclairage et/ou de la signalisation lumineuse, notamment pour véhicule automobile. Plus particulièrement, l'invention a trait au domaine de dispositifs lumineux comprenant un guide de lumière.

Dans le domaine de l'éclairage et de la signalisation de véhicules automobiles, il est de plus en plus fréquent d'utiliser des guides optiques. En effet, ceux-ci présentent l'avantage de pouvoir prendre des formes géométriques très variées et d'amener une surface éclairante même dans des zones peu accessibles d'un dispositif d'éclairage et/ou de signalisation. Ceci est particulièrement intéressant dans le contexte actuel où les constructeurs automobiles cherchent à donner à leurs véhicules une signature qui leur est propre, notamment en proposant des formes complexes aux dispositifs d'éclairage et/ou de signalisation.

Par guide optique, on vise dans la présente demande une pièce transparente ou translucide à l'intérieur de laquelle des rayons lumineux se propagent de manière contrôlée depuis une des extrémités du guide, appelée face d'entrée, jusqu'à au moins une face de sortie. La propagation de la lumière de manière contrôlée s'effectue généralement par des réflexions totales successives sur diverses faces de réflexion internes au guide optique.

Le document de brevet US 2014/0177278 A1 divulgue un guide de lumière en forme de plaque avec deux faces principales opposées. De la lumière produite par des sources lumineuses entre dans le guide via une des faces latérales. Les rayons lumineux se propagent alors par réflexions successives sur les deux faces principales du guide. Ces dernières forment en effet des dioptres avec l'air ambiant et permettent ainsi aux rayons incidents selon un angle supérieur à l'angle de réfraction limite, de subir une réflexion dite totale. Une des faces principales du guide comprend des microstructures sous forme de creux ou bosses formant, eux aussi, des dioptres avec l'air ambiant. Les rayons se propageant essentiellement suivant l'étendue du guide qui rencontrent une face des creux subissent une réflexion totale dirigée vers l'autre face principale. Cette dernière est alors la face de sortie du guide. La lumière découplée du guide par lesdits creux peut, en fonction du nombre et de la taille des creux, se concentrer au niveau des creux et former des points de lumière. Afin d'homogénéiser la lumière sur la face de sortie, cet enseignement prévoit de faire fondre le fond des creux de manière à rendre ces surfaces non plane et/ou avec un état de surface plus grossier. Cette mesure a pour effet de conférer aux creux, en l'occurrence à leurs fonds, une capacité diffusante qui permet de diffuser de manière essentiellement aléatoire une partie de la lumière que chaque creux découple du guide. Cette mesure nécessite cependant des efforts particuliers d'un point de vue fabrication car chaque creux doit en effet subir un traitement particulier, comme notamment l'application d'une pointe à ultrason avec refroidissement. Durant les opérations de réalisation des creux, la matière plastique du guide amenée à l'état liquide le long des parois latérales des creux peut alors s'écouler par gravité dans les fonds des creux pour s'y refroidir et former un dioptre diffusant. Il s'agit par conséquent d'une procédure longue et potentiellement coûteuse. De plus, elle requiert une maîtrise de l'opération de fusion et de refroidissement de la matière du guide pour obtenir un effet adéquat.

De plus, des phénomènes de modes peuvent apparaître le long de l'étendue longitudinale du guide, ces phénomènes formant une alternance de bandes plus éclairées et de bandes plus sombres. Ce phénomène peut par ailleurs être accentué lorsque le guide présente un profil courbe.

L'invention a pour objectif de proposer un guide optique de lumière palliant au moins un des inconvénients de l'état de la technique. Plus précisément, l'invention a pour objectif de proposer un guide optique en forme de plaque qui présente une bonne homogénéité de lumière sur l'étendue de la face de sortie.

L'invention a pour objet un guide optique de lumière en matériau transparent ou translucide, de forme généralement étendue avec deux faces principales opposées, et comprenant: une zone d'entrée de la lumière ; une zone de sortie de la lumière avec des moyens de réflexion de la lumière vers la zone de sortie ; remarquable en qu'il comprend, en outre, des moyens de dispersion de la lumière au sein du guide, lesdits moyens étant situés entre la zone d'entrée et les zones de sortie et de réflexion.

Selon un mode avantageux de l'invention, les moyens de dispersion s'étendent transversalement à la direction générale des rayons lumineux se propageant de la zone d'entrée vers la zone de sortie et/ou la zone de réflexion.

Selon un mode avantageux de l'invention, les moyens de dispersion s'étendent transversalement de manière à générer un effet de dispersion des rayons sur plus de 80%, préférentiellement plus de 90%, de la hauteur, suivant l'épaisseur du guide, de la zone de sortie et/ou de la zone de réflexion. Par épaisseur du guide on entend suivant une direction perpendiculaire à son étendue.

Selon un mode avantageux de l'invention, les moyens de dispersion sont à une distance de moins de 20mm, préférentiellement 10mm, plus préférentiellement 5mm, de la zone d'entrée.

Selon un mode avantageux de l'invention, la zone d'entrée est sur une face latérale du guide, les moyens de dispersion s'étendant parallèlement à ladite face.

Selon un mode avantageux de l'invention, les moyens de dispersion sont à distance de la zone de sortie et/ou de la zone de réflexion.

Selon un mode avantageux de l'invention, les moyens de dispersion sont venus de matière avec le matériau transparent ou translucide du guide.

Selon un mode avantageux de l'invention, les moyens de dispersion comprennent des cannelures s'étendant sur au moins une des faces principales, transversalement à la direction principale des rayons lumineux depuis la zone d'entrée vers les zones de sortie et de réflexion.

Selon un mode avantageux de l'invention, les cannelures présentent un rayon moyen $R$ et sont adjacentes avec un pas moyen $P$, et en ce que $P \le R \le 10 \ x \ P$, préférentiellement $1.5 \ x \ P \le R \le 5 \ x \ P$.

Selon un mode avantageux de l'invention, la ou au moins une des cannelures la plus proche de la zone d'entrée est à une distance de ladite zone qui est inférieure à 20mm, préférentiellement 10mm, plus préférentiellement 5mm.

Selon un mode avantageux de l'invention, les cannelures sont au nombre de 5 ou plus, préférentiellement 10 ou plus, plus préférentiellement 15 ou plus, sur au moins une des faces principales du guide.

Selon un mode avantageux de l'invention, les moyens de dispersion comprennent une rainure avec une face latérale de sortie des rayons du guide et une face latérale opposée de rentrée des rayons dans le guide, au moins une desdites deux faces présentant un relief diffusant. La rainure est formée, au choix, sur une des faces deux faces principales opposées du guide. Il est également possible de prévoir plusieurs rainures, avec au moins une rainure sur chacune desdites faces.

Selon un mode avantageux de l'invention, le relief diffusant de la ou des faces latérales de la rainure est grainée et/ou comprend des surfaces convexes.

Selon un mode avantageux de l'invention, la rainure présente une profondeur moyenne supérieure à 20%, préférentiellement 40%, plus préférentiellement 60%, plus préférentiellement 80%, à l'épaisseur moyenne du guide à l'emplacement de ladite rainure.

Selon un mode avantageux de l'invention, la rainure comprend plusieurs portions, lesdites portions étant préférentiellement séparées l'une de l'autre.

Selon un mode avantageux de l'invention, le guide comprend, entre les faces principales opposées, sur la zone de réflexion et/ou la zone de sortie, un matériau diffusant et distinct du matériau formant le guide depuis la zone d'entrée jusqu'à la zone de sortie et/ou la zone de réflexion.

Selon un mode avantageux de l'invention, le matériau diffusant présente une valeur de trouble selon la norme ASTM D1003 qui est égale ou supérieure à 0.5%, préférentiellement 1%, plus préférentiellement 1.5%.

Selon un mode avantageux de l'invention, le matériau formant le guide depuis la zone d'entrée jusqu'à la zone de sortie et/ou la zone de réflexion présente une valeur de trouble selon la norme ASTM D1003 qui est égale ou inférieure à 0.5%.

Selon un mode avantageux de l'invention, le matériau diffusant s'étend, préférentiellement de manière continue, sur la majorité, préférentiellement la totalité, de la zone de réflexion et/ou la zone de sortie.

Selon un mode avantageux de l'invention, le matériau diffusant s'étend sur au moins une partie, préférentiellement sur la totalité, de l'épaisseur du guide optique.

Selon un mode avantageux de l'invention, les moyens de réflexion sur la face de réflexion sont des microstructures, préférentiellement prismatique.

Selon un mode avantageux de l'invention, la taille et/ou la densité des microstructures augmente(nt) avec la distance de la zone d'entrée de manière à compenser la diminution progressive de la puissance lumineuse provoquée par les microstructures.

Selon un mode avantageux de l'invention, la zone de réflexion est située sur l'une deux faces principales opposées dudit guide, préférentiellement sur la face principale opposée à celle avec la zone de sortie.

L'invention a également pour objet un module de signalisation lumineuse, comprenant un guide optique de lumière et au moins une source lumineuse, remarquable en ce que le guide optique est un guide selon l'invention.

Les mesures de l'invention sont intéressantes notamment en ce qu'elles éliminent le problème de lignes verticales essentiellement liées au phénomène de modes, et ce par des moyens simples et économiques. En effet, les cannelures peuvent être facilement réalisées lors du moulage du guide. Il en va de même pour la ou les rainures. Le grainage d'une des faces ou des faces de la rainure ou des rainures peut être réalisé par différents moyens connus en soi de l'homme de métier comme notamment par sablage, projection de matière, etc. Les pertes de lumière peuvent être très limitées, de manière à conserver un rendement optique acceptable.

D'autres caractéristiques et avantages de la présente invention seront mieux compris à l'aide de la description et des dessins parmi lesquels :

- La figure 1 est une vue en perspective d'un guide de lumière conforme à l'invention selon un premier mode de réalisation ;
- La figure 2 est une vue schématique en coupe du guide de lumière de la figure 1, la coupe étant dans un plan perpendiculaire au plan moyen du guide et orienté suivant la direction principale de propagation des rayons dans le guide ;
- La figure 3 est une vue en perspective d'un guide de lumière conforme à l'invention selon un deuxième mode de réalisation ;
- La figure 4 est une vue schématique en coupe du guide de lumière de la figure 3, la coupe étant dans un plan perpendiculaire au plan moyen du guide et orienté suivant la direction principale de propagation des rayons dans le guide ;
- La figure 5 est une représentation schématique en plan du guide de lumière de la figure 4 ;
- La figure 6 est une représentation schématique en plan d'une variante du guide de lumière des figures 4 et 5 ;

- La figure 7 est une vue schématique en coupe d'un guide de lumière conforme à l'invention selon un troisième mode de réalisation.

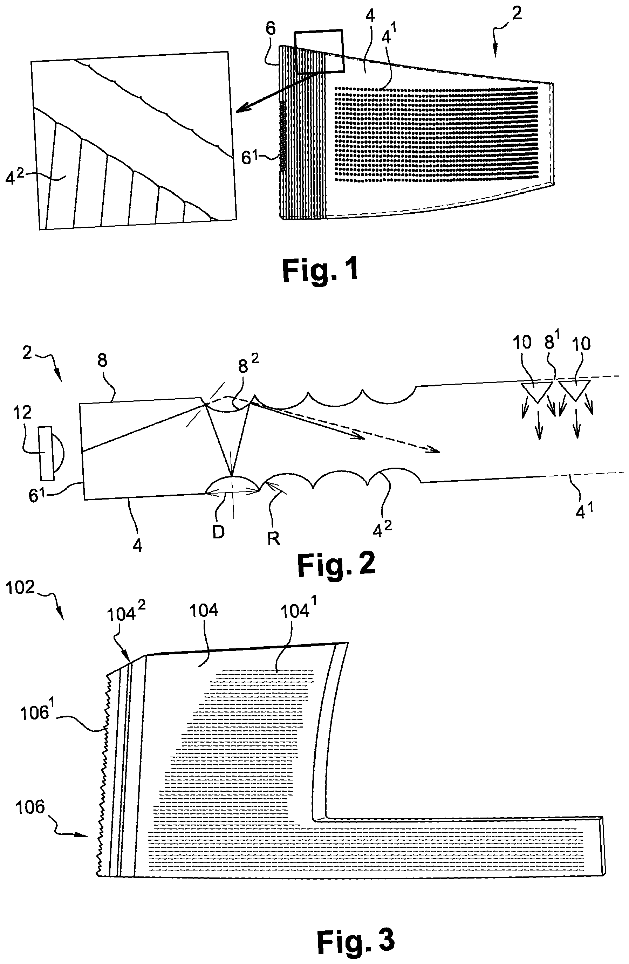

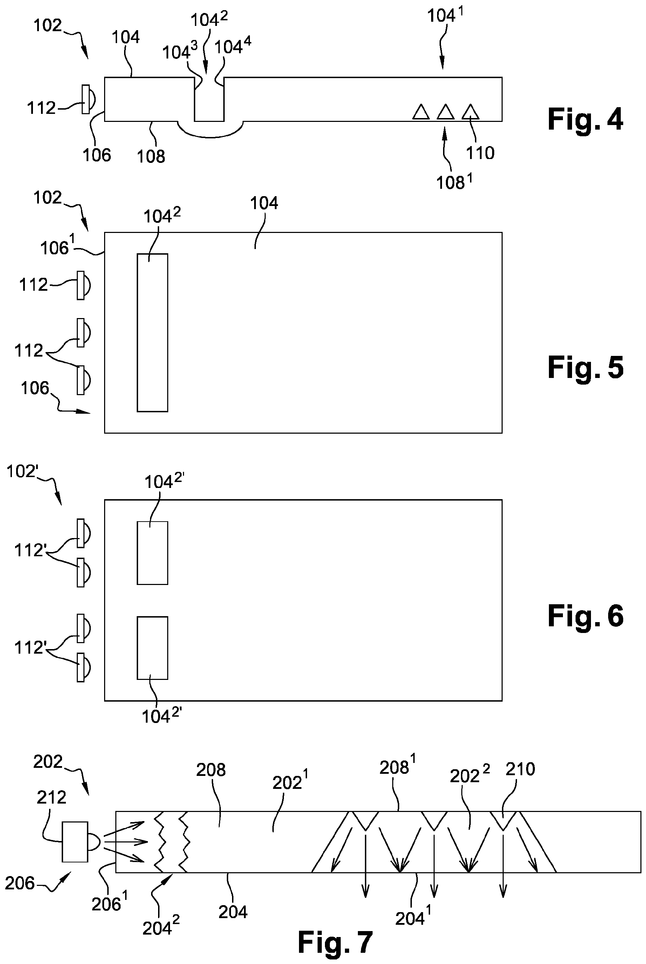

Les figures 1 et 2 illustrent un premier mode de réalisation de l'invention, les figures 3 à 5 un deuxième mode de réalisation, la figure 6 une variante du deuxième mode et la figure 7 un troisième mode de réalisation.

La figure 1 est une vue en perspective d'un guide de lumière conforme au premier mode de réalisation de l'invention. Le guide de lumière 2 est constitué d'une plaque en matériau transparent ou translucide apte à transmettre des rayons lumineux. Cette plaque peut être plane ou courbe et présenter un contour régulier ou irrégulier. A la figure 1, cette plaque présente un contour rectangulaire, étant entendu que d'autres contours sont envisageables.

Le guide de lumière 2 comprend deux faces principales opposées et généralement parallèles l'une à l'autre. Il comprend également une face latérale 6 avec une zone $6^1$ d'entrée de la lumière produite par des sources lumineuses (non représentées à la figure 1). En l'occurrence, la zone d'entrée de la lumière $6^1$ comprend des collimateurs du type lentille de Fresnel, étant entendu que la présence de collimateurs est optionnelle et que d'autres types de collimateurs sont envisageables. La face avant 4 comprend une zone $4^1$ de sortie de la lumière, cette zone correspondant essentiellement à la zone de la face arrière comprenant les microstructures visibles par transparence à la figure 1.

La figure 2 illustre davantage les détails du guide de lumière de la figure 1. Il s'agit d'une vue schématique en coupe longitudinale, c'est-à-dire suivant un plan généralement perpendiculaire au plan moyen du guide et orienté selon la direction principale ou moyenne de propagation des rayons. Cette direction est généralement horizontale sur la figure 1.

A la figure 2, on peut observer la face avant 4 et la face arrière 8 du guide, ces faces formant les faces principales. On peut également observer les microstructures 10 formées sur une zone dite de réflexion $8^1$ de la face arrière 8. Une source lumineuse 12 est représentée en vis-à-vis de la zone d'entrée de la lumière $6^1$. Il est entendu que plusieurs sources lumineuses peuvent être réparties le long de la zone d'entrée $6^1$. Les microstructures 10 sont des creux formés sur la face arrière 8, formant des dioptres aptes à réfléchir les rayons se propageant dans le guide depuis la zone d'entrée, les rayons réfléchis étant dirigés vers la face avant 4 sur la zone de sortie $4^1$. Ce phénomène est bien connu en soi de l'homme de métier; il n'est par conséquent pas nécessaire de le détailler davantage.

Comme cela est visible à la figure 1 et à la figure 2, le guide 2 comprend sur ses faces avant 4 et arrière 8 des cannelures $4^2$ et $8^2$, respectivement. Ces cannelures s'étendent transversalement, préférentiellement perpendiculairement, à la direction longitudinale du guide. Cette succession de surfaces courbes permet aux rayons de se mélanger lors de leur parcours le long du guide et, partant, de diminuer voire de supprimer le phénomène de modes. Le phénomène de modes forme une alternance de bandes plus éclairées et de bandes plus sombres. Les cannelures sont disposées entre la zone d'entrée de la lumière $6^1$ et la ou les zones éclairées, c'est-à-dire en l'occurrence la zone $8^1$ comprenant les microstructures 10 et la zone de sortie $4^1$ qui est essentiellement superposée à la zone $8^1$ des microstructures.

Le parcours d'un rayon est illustré à la figure 2 : on peut y observer en trait interrompu le parcours de ce rayon en l'absence des cannelures et en trait continu le parcours généré par les cannelures. Il apparaît clairement que les réflexions successives sur les dioptres formés par les cannelures ont pour effet de dévier davantage les rayons et, partant, de leur faire subir un plus grand nombre de réflexions, ce qui a pour effet de les mélanger et réduire ou annuler les phénomènes de mode.

Les cannelures forment des sillons ou stries dans la surface du matériau du guide. En l'occurrence ces sillons ou stries sont généralement de profil circulaire, étant entendu qu'ils pourraient être de profil elliptique ou plus simplement généralement de profil courbe concave sans nécessairement être circulaire. Toujours dans le cas de la figure 2, les cannelures sont adjacentes, étant entendu qu'elles peuvent être distantes l'une de l'autre. Similairement, elles peuvent être présentes sur une seule des deux faces du guide ou sur les deux, comme dans le cas des figures 1 et 2.

Les cannelures peuvent présenter un pas P et un rayon moyen R répondant à la relation $P \leq R \leq 10 \times P$, préférentiellement $1.5 \times P \leq R \leq 5 \times P$. Ces relations procurent une forme peu profonde et aplatie des cannelures et, partant, des angles d'incidence des rayons supérieurs à l'angle limite de réfraction, induisant un taux de réflexion important.

Les figures 3 à 5 illustrent un guide de lumière conforme à l'invention selon un deuxième mode de réalisation. Les numéros de référence du premier mode sont utilisés pour les éléments identiques ou correspondants du deuxième mode, ces numéros étant toutefois majorés de 100. Des numéros de référence spécifiques compris entre 100 et 200 sont utilisés pour les éléments spécifiques.

Le guide de lumière 102 présente un contour en forme de L, et non plus rectangulaire comme à la figure 1. Similairement au guide de la figure 1, le guide 102 comprend deux faces principales opposées et généralement parallèles l'une à l'autre. Il comprend également une face latérale 106 avec une zone $106^1$ d'entrée de la lumière produite par des sources lumineuses (non représentées à la figure 3). Similairement au premier mode de réalisation, la zone d'entrée de la lumière $106^1$ comprend des collimateurs du type lentille de Fresnel, étant entendu que la présence de collimateurs est optionnelle et que d'autres types de collimateurs sont envisageables. Similairement au premier mode de réalisation, la face avant 104 comprend une zone 104$^1$ de sortie de la lumière, cette zone correspondant essentiellement à la zone de la face arrière comprenant les microstructures visibles par transparence à la figure 3.

A la différence du guide de la figure 1, le guide de lumière 102 comprend entre la zone d'entrée de la lumière 106$^1$ et la ou les zones éclairées 104$^1$, au lieu des cannelures, une fente 104$^2$. L'objectif de cette fente est similaires aux cannelures du premier mode de réalisation, à savoir de mélanger les rayons et éviter les phénomènes de mode susmentionné.

La figure 4 est une vue schématique en coupe longitudinale du guide de la figure 3. La fente 104$^2$ y est illustrée de manière schématique. On peut observer qu'elle s'étend sur la quasi-totalité de l'épaisseur du guide, ce dernier comprenant une portion de matière formant un bossage sur la face arrière 108 est assurant une liaison mécanique entre les deux parties du guide de part et d'autre de la rainure 104$^2$. Il est toutefois à noter que la rainure peut ne s'étendre en profondeur que sur une partie seulement de l'épaisseur du guide et que la présence du bossage de matière n'est alors pas nécessaire.

La section de la rainure 104$^2$ peut prendre diverses formes pour autant qu'elle forme une face de sortie 104$^3$ et une face d'entrée 104$^4$ des rayons. En effet, chacune de ces deux faces forme un dioptre avec l'air présent dans la rainure. Les rayons sortant de la face de sortie 104$^3$ se voient réfractés une première fois pour être ensuite réfractés une deuxième fois lors de la rentrée dans le guide par la face d'entrée 104$^4$ de la rainure. L'une des faces de sortie et d'entrée, ou les faces en question, peuvent être grainées de manière à diffuser la lumière lors de son passage. Le grainage peut correspondre à une rugosité $R_a$ comprise entre $0.4 \mu m$ et $20 \mu m$. Alternativement ou de manière complémentaire, l'une des faces de sortie et d'entrée, ou les faces en question, peuvent présenter des surfaces dispersives de petite taille comme notamment des surfaces convexes. Les surfaces dispersives peuvent présenter une taille moyenne inférieure à 1 mm. Elles peuvent présenter des formes toriques, c'est-à-dire rondes et essentiellement semi-cylindriques.

La figure 5 est une vue en plan du guide 102 de la figure 4. On peut observer que la rainure 104$^2$ s'étend de manière continue sur la majeure partie de la largeur (mesurée perpendiculairement à la direction principale de propagation des rayons depuis la zone d'entrée 106$^1$) du guide. Elle peut également s'étendre sur la totalité de la largeur.

La figure 6 est une vue en plan du guide de la figure 4, selon une variante à la configuration visible à la figure 5. Les signes de référence correspondent à ceux des figures 3 à 5, complétés toutefois du signe « ' ». Le guide 102' comprend une rainure 104$^{2'}$ avec deux tronçons séparés l'un de l'autre et dans l'alignement l'un de l'autre. Il est à noter que d'autres configurations sont également envisageables, comme notamment le fait de prévoir plusieurs tronçons de rainures décalés longitudinalement l'un par rapport à l'autre ou aux autres.

La figure 7 est une vue schématique en coupe d'un guide de lumière conforme à l'invention selon un troisième mode de réalisation. Les numéros de référence du premier mode sont utilisés pour les éléments identiques ou correspondants du deuxième mode, ces numéros étant toutefois majorés de 200. Des numéros de référence spécifiques compris entre 200 et 300 sont utilisés pour les éléments spécifiques.

La portion 204$^2$ du guide 202 située entre la face d'entrée 206 et la zone d'éclairage 204$^1$ n'est pas détaillée à la figure 7, cette portion pouvant comprendre des cannelures et/ou un rainure selon le premier et le deuxième mode de réalisation, respectivement. Le guide 202 comprend des moyens additionnels de diffusion des rayons, destinés également à éviter les rayures verticales. En effet, le matériau 202$^2$ formant le guide 202 au niveau des zones de réflexion 208$^1$ et de sortie 204$^1$ est différent du matériau 202$^1$ formant le reste du guide, plus particulièrement formant le guide depuis la face d'entrée 206 jusqu'aux dites zones 204$^1$ et 208$^1$. En effet, le matériau 202$^2$ est un matériau présentant des propriétés de diffusion de la lumière, contrairement au matériau 202$^1$, tout en restant transparent et en conservant un aspect de cristal.

La capacité d'un matériau transparent ou translucide à diffuser la lumière peut être exprimée par le taux de trouble (ou « Haze » en anglais) de la norme ASTM D 1003-00. Cette norme prévoit, essentiellement, de faire passer un faisceau de rayons lumineux parallèles au travers d'un spécimen en matériau transparent ou translucide à tester, le spécimen étant disposé devant un orifice d'une sphère. La sphère en question comprend également un orifice de sortie aligné avec le centre de la sphère et l'orifice d'entrée. La transmittance (ou facteur de transmission) de lumière $T_t$ entrant dans la sphère ainsi que la transmittance (ou facteur de transmission) de lumière diffusée $T_d$ dans la sphère sont mesurées. Le taux de trouble ou « Haze » est alors exprimé comme suit :

$$Haze = \frac{T_d}{T_t} \; x \; 100$$

où $T_t$ est le rapport entre la quantité totale de lumière transmise par le spécimen et la lumière incidente au spécimen, et $T_d$ est le rapport entre la quantité de lumière diffusée par l'instrumentation et le spécimen, diminuée de la quantité de lumière diffusée exclusivement par l'instrumentation (c'est-à-dire en l'absence de spécimen), et la lumière incidente au spécimen.

Le matériau 202$^2$ peut présenter un taux de trouble compris entre 0.5% et 10%. Ce taux dépend cependant de la longueur du guide à allumer. Par longueur du guide à allumer, on entend celle correspondant au parcours des rayons lumineux depuis les microstructures les plus proches de la ou des sources de lumière jusqu'aux microstructures les plus éloignées desdites sources lumineuses. A titre d'exemple, pour une longueur inférieure ou égale à 6 cm, le taux de trouble peut être compris entre 4% et 10% et pour une longueur au-delà de 10 cm, le taux de trouble est compris entre 0.5% et 4%.

Le matériau $202^2$ peut par exemple être du PLEXIGLAS® LED 8N LD48 de la société Evonik®, présentant un taux de trouble compris entre 0.5% et 2%. A titre d'exemple, il peut également être du PLEXIGLAS® LED 8N LD12 de la même société, présentant un taux de trouble de l'ordre de 5%.

Les matériaux $202^1$ et $202^2$ sont préférentiellement des matériaux plastiques, plus préférentiellement thermoplastiques. Ils peuvent être co-injectés ou injectés l'un après l'autre, de manière à assurer une cohésion chimique au niveau de leurs jonctions.

Le matériau $202^1$ formant le reste du guide, ou du moins la portion du guide s'étendant depuis la zone d'entrée jusqu'aux zones de réflexion $208^1$ et de sortie $204^1$, présente quant à lui un taux de trouble égal ou proche de 0, préférentiellement inférieur à 1, plus préférentiellement inférieur à 0.5%.

**Revendications**

1. Guide optique (2 ; 102 ; 202) de lumière en matériau transparent ou translucide, de forme généralement étendue avec deux faces principales opposées (4, 8 ; 104, 108 ; 204, 208), et comprenant :

   - une zone d'entrée ($6^1$ ; $106^1$ ; $206^1$) de la lumière ;
   - une zone de sortie ($4^1$; $104^1$ ; $204^1$) de la lumière sur une des deux faces principales opposées ;
   - une zone de réflexion ($8^1$ ; $108^1$ ; $208^1$) avec des moyens de réflexion (10 ; 110 ; 210) de la lumière vers la zone de sortie ($4^1$ ; $104^1$ ; $204^1$) ;

   caractérisé en qu'il comprend, en outre :

   des moyens de dispersion ($4^2$, $8^2$ ; $104^2$ ; $204^2$) de la lumière au sein du guide, lesdits moyens étant situés entre la zone d'entrée ($6^1$ ; $106^1$ ; $206^1$) et les zones de sortie ($4^1$ ; $104^1$ ; $204^1$) et de réflexion ($8^1$ ; $108^1$ ; $208^1$), les moyens de dispersion comprenant des cannelures ($4^2$, $8^2$) s'étendant sur au moins une des faces principales (4, 8), transversalement à la direction principale des rayons lumineux depuis la zone d'entrée ($6^1$) vers les zones de sortie ($4^1$) et de réflexion ($8^1$).

2. Guide optique (2 ; 102 ; 202) selon la revendication 1, caractérisé en ce que les moyens de dispersion ($4^2$, $8^2$ ; $104^2$ ; $204^2$) s'étendent transversalement à la direction générale des rayons lumineux se propageant de la zone d'entrée ($6^1$ ; $106^1$ ; $206^1$) vers la zone de sortie ($4^1$ ; $104^1$ ; $204^1$) et/ou la zone de réflexion ($8^1$ ; $108^1$ ; $208^1$).

3. Guide optique (2 ; 102 ; 202) selon la revendication 2, caractérisé en ce que les moyens de dispersion ($4^2$, $8^2$ ; $104^2$ ; $204^2$) s'étendent transversalement de manière à générer un effet de dispersion des rayons sur plus de 80%, préférentiellement plus de 90%, de la hauteur, suivant l'épaisseur du guide, de la zone de sortie ($4^1$ ; $104^1$ ; $204^1$) et/ou de la zone de réflexion ($8^1$ ; $108^1$ ; $208^1$).

4. Guide optique (2 ; 102 ; 202) selon l'une des revendications 1 à 3, caractérisé en ce que les moyens de dispersion ($4^2$, $8^2$ ; $104^2$ ; $204^2$) sont à une distance de moins de 20mm, préférentiellement 10mm, plus préférentiellement 5mm, de la zone d'entrée ($6^1$ ; $106^1$ ; $206^1$).

5. Guide optique (2 ; 102 ; 202) selon l'une des revendications 1 à 4, caractérisé en ce que la zone d'entrée ($6^1$ ; $106^1$ ; $206^1$) est sur une face latérale (6 ; 106 ; 206) du guide, les moyens de dispersion ($4^2$, $8^2$ ; $104^2$; $204^2$) s'étendant parallèlement à ladite face.

6. Guide optique (2 ; 102 ; 202) selon l'une des revendications 1 à 5, caractérisé en ce que les moyens de dispersion ($4^2$, $8^2$ ; $104^2$ ; $204^2$) sont à distance de la zone de sortie ($4^1$; $104^1$ ; $204^1$) et/ou de la zone de réflexion ($8^1$ ; $108^1$ ; $208^1$).

7. Guide optique (2 ; 102 ; 202) selon l'une des revendications 1 à 6, caractérisé en ce que les moyens de dispersion ($4^2$, $8^2$ ; $104^2$ ; $204^2$) sont venus de matière avec le matériau transparent ou translucide du guide.

8. Guide optique (2) selon l'une des revendications 1 à 7, caractérisé en ce que les cannelures ($4^2$, $8^2$) présentent un rayon moyen $R$ et sont adjacentes avec un pas moyen $P$, et en ce que $P \leq R \leq 10 \ x \ P$, préférentiellement $1.5 \ x \ P \leq R \leq 5 \ x \ P$.

9. Guide optique (2) selon l'une des revendications 1 à 8, caractérisé en ce que la ou au moins une des cannelures ($4^2$, $8^2$) la plus proche de la zone d'entrée ($6^1$) est à une distance de ladite zone qui est inférieure à 20mm, préférentiellement 10mm, plus préférentiellement 5mm.

10. Guide optique (2) selon l'une des revendications 1 à 9, caractérisé en ce que les cannelures ($4^2$, $8^2$) sont au nombre de 5 ou plus, préférentiellement 10 ou plus, plus préférentiellement 15 ou plus, sur au moins une des faces principales (4, 8) du guide.

**11.** Guide optique (202) selon l'une des revendications 1 à 10, **caractérisé en ce que** le guide comprend, entre les faces principales opposées, sur la zone de réflexion ($208^1$) et/ou la zone de sortie ($204^1$), un matériau diffusant ($202^2$) et distinct du matériau ($202^1$) formant le guide depuis la zone d'entrée ($206^1$) jusqu'à la zone de sortie ($204^1$) et/ou la zone de réflexion ($208^1$).

**12.** Guide optique (202) selon la revendication 11, **caractérisé en ce que** le matériau diffusant ($202^2$) présente une valeur de trouble selon la norme ASTM D1003 qui est égale ou supérieure à 0.5%, préférentiellement 1%, plus préférentiellement 1.5%.

**13.** Guide optique (202) selon l'une des revendications 11 et 12, **caractérisé en ce que** le matériau ($202^1$) formant le guide depuis la zone d'entrée ($206^1$) jusqu'à la zone de sortie ($204^1$) et/ou la zone de réflexion ($208^1$) présente une valeur de trouble selon la norme ASTM D1003 qui est égale ou inférieure à 0.5%.

**14.** Guide optique (202) selon l'une des revendications 11 à 13, **caractérisé en ce que** le matériau diffusant ($202^2$) s'étend, préférentiellement de manière continue, sur la majorité, préférentiellement la totalité, de la zone de réflexion ($208^1$)et/ou la zone de sortie ($204^1$).

**15.** Guide optique (202) selon l'une des revendications 11 à 14, **caractérisé en ce que** le matériau diffusant ($202^2$) s'étend sur au moins une partie, préférentiellement sur la totalité, de l'épaisseur du guide optique.

**16.** Guide optique (2 ; 102 ; 202) selon l'une des revendications 1 à 15, **caractérisé en ce que** les moyens de réflexion sur la face de réflexion sont des microstructures (10 ; 110 ; 210), préférentiellement prismatiques.

**17.** Guide optique (2 ; 102 ; 202) selon la revendication 16, **caractérisé en ce que** la taille et/ou la densité des microstructures (10 ; 110 ; 210) augmente(nt) avec la distance de la zone d'entrée ($6^1$ ; $106^1$ ; $206^1$) de manière à compenser la diminution progressive de la puissance lumineuse provoquée par les microstructures.

**18.** Guide optique (2 ; 102 ; 202) selon l'une des revendications 1 à 17, **caractérisé en ce que** la zone de réflexion ($8^1$ ; $108^1$ ; $208^1$) est située sur l'une deux faces principales opposées (4, 8 ; 104, 108 ; 204, 208) dudit guide (2 ; 102 ; 202), préférentiellement sur la face principale (8 ; 108 ; 208) opposée à celle (4 ; 104 ; 204) avec la zone de sortie ($4^1$ ; $104^1$ ; $204^1$).

**19.** Module de signalisation lumineuse, comprenant un guide optique de lumière et au moins une source lumineuse, **caractérisé en ce que** le guide optique (2 ; 102 ; 202) est un guide selon l'une des revendications 1 à 18.

**Patentansprüche**

**1.** Optischer Lichtleiter (2; 102; 202) aus einem transparenten oder transluziden Material, der eine im Allgemeinen lang gestreckte Form mit zwei gegenüberliegenden Hauptflächen (4, 8; 104, 108; 204, 208) besitzt und der Folgendes umfasst:

- eine Eintrittszone ($6^1$, $106^1$, $206^1$) für Licht;
- eine Austrittszone ($4^1$, $104^1$, $204^1$) für Licht auf einer der beiden gegenüberliegenden Hauptflächen;
- eine Reflexionszone ($8^1$, $108^1$, $208^1$) mit Mitteln (10; 110; 210) zum Reflektieren von Licht zu der Austrittszone ($4^1$, $104^1$, $204^1$);

**dadurch gekennzeichnet, dass** er außerdem Folgendes umfasst:

Mittel ($4^2$, $8^2$; $104^2$; $204^2$) zum Streuen von Licht innerhalb des Leiters, wobei sich diese Mittel zwischen einerseits der Eintrittszone ($6^1$, $106^1$, $206^1$) und andererseits der Austrittszone ($4^1$, $104^1$, $204^1$) und der Reflexionszone ($8^1$, $108^1$, $208^1$) befinden, wobei die Streumittel Rillen ($4^2$, $8^2$) aufweisen, die sich auf wenigstens einer der Hauptflächen (4, 8) quer zu der Hauptrichtung der Lichtstrahlen von der Eintrittszone ($6^1$) zu der Austrittszone ($4^1$) und zu der Reflexionszone ($8^1$) erstrecken.

**2.** Optischer Leiter (2; 102; 202) nach Anspruch 1, **dadurch gekennzeichnet, dass** sich die Streumittel ($4^2$, $8^2$; $104^2$; $204^2$) quer zu der Hauptrichtung der Lichtstrahlen erstrecken, die sich von der Eintrittszone ($6^1$, $106^1$, $206^1$) zu der Austrittszone ($4^1$, $104^1$, $204^1$) und/oder zu der Reflexionszone ($8^1$, $108^1$, $208^1$) ausbreiten.

**3.** Optischer Leiter (2; 102; 202) nach Anspruch 2, **dadurch gekennzeichnet, dass** sich die Streumittel ($4^2$, $8^2$; $104^2$; $204^2$) quer erstrecken, derart, dass eine Streuwirkung der Strahlen auf mehr als 80 %, vorzugsweise mehr als 90 %, der Höhe in Dickenrichtung des Leiters, der Austrittszone ($4^1$, $104^1$, $204^1$) und/oder der Reflexionszone ($8^1$, $108^1$, $208^1$) erzeugt wird.

**4.** Optischer Leiter (2; 102; 202) nach einem der Ansprüche 1 bis 3, **dadurch gekennzeichnet, dass**

sich die Streumittel ($4^2$, $8^2$; $104^2$; $204^2$) in einem Abstand von wenigstens 20 mm, vorzugsweise 10 mm, stärker bevorzugt 5 mm, von der Eintrittszone ($6^1$, $106^1$, $206^1$) befinden.

5. Optischer Leiter (2; 102; 202) nach einem der Ansprüche 1 bis 4, **dadurch gekennzeichnet, dass** sich die Eintrittszone ($6^1$, $106^1$, $206^1$) auf einer Seitenfläche (6; 106; 206) des Leiters befindet und die Streumittel ($4^2$, $8^2$; $104^2$; $204^2$) sich parallel zu dieser Fläche erstrecken.

6. Optischer Leiter (2; 102; 202) nach einem der Ansprüche 1 bis 5, **dadurch gekennzeichnet, dass** sich die Streumittel ($4^2$, $8^2$; $104^2$; $204^2$) in einem Abstand von der Austrittszone ($4^1$, $104^1$, $204^1$) und/oder von der Reflexionszone ($8^1$, $108^1$, $208^1$) befinden.

7. Optischer Leiter (2; 102; 202) nach einem der Ansprüche 1 bis 6, **dadurch gekennzeichnet, dass** die Streumittel ($4^2$, $8^2$; $104^2$; $204^2$) einteilig aus dem transparenten oder transluziden Material des Leiters hergestellt sind.

8. Optischer Leiter (2) nach einem der Ansprüche 1 bis 7, **dadurch gekennzeichnet, dass** die Rillen ($4^2$, $8^2$) einen mittleren Radius R aufweisen und mit einer Schrittweite P einander benachbart sind und dass $P \leq R \leq 10 \times P$, vorzugsweise $1,5 \times P \leq R \leq 5 \times P$.

9. Optischer Leiter (2) nach einem der Ansprüche 1 bis 8, **dadurch gekennzeichnet, dass** sich die Rille oder wenigstens eine der Rillen ($4^2$, $8^2$), die sich am nächsten bei der Eintrittszone ($6^1$) befindet, in einem Abstand von der Zone befindet, der kleiner als 20 mm, vorzugsweise 10 mm, stärker bevorzugt 5 mm, ist.

10. Optischer Leiter (2) nach einem der Ansprüche 1 bis 9, **dadurch gekennzeichnet, dass** die Rillen ($4^2$, $8^2$) in der Anzahl 5 oder mehr, vorzugsweise 10 oder mehr, stärker bevorzugt 15 oder mehr, auf wenigstens einer der Hauptflächen (4, 8) des Leiters vorhanden sind.

11. Optischer Leiter (202) nach einem der Ansprüche 1 bis 10, **dadurch gekennzeichnet, dass** der Leiter zwischen den gegenüberliegenden Hauptflächen auf der Reflexionszone ($208^1$) und/oder der Austrittszone ($204^1$) ein Material ($202^2$) aufweist, das streut und von dem Material ($202^1$), das den Leiter von der Eintrittszone ($206^1$) bis zu der Austrittszone ($204^1$) und/oder der Reflexionszone ($208^1$) bildet, verschieden ist.

12. Optischer Leiter (202) nach Anspruch 11, **dadurch gekennzeichnet, dass** das streuende Material ($202^2$) einen Trübungswert gemäß der Norm ASTM D1003 aufweist, der gleich oder größer als 0,5 %, vorzugsweise 1 %, stärker bevorzugt 1,5 %, ist.

13. Optischer Leiter (202) nach einem der Ansprüche 11 und 12, **dadurch gekennzeichnet, dass** das Material ($202^1$), das den Leiter von der Eintrittszone ($206^1$) bis zu der Austrittszone ($204^1$) und/oder der Reflexionszone ($208^1$) bildet, einen Trübungswert gemäß der Norm ASTM D1003 aufweist, der gleich oder kleiner als 0,5 % ist.

14. Optischer Leiter (202) nach einem der Ansprüche 11 bis 13, **dadurch gekennzeichnet, dass** sich das streuende Material ($202^2$) vorzugsweise ununterbrochen auf dem größten Teil der und vorzugsweise auf der gesamten Reflexionszone ($208^1$) und/oder Austrittszone ($204^1$) erstreckt.

15. Optischer Leiter (202) nach einem der Ansprüche 11 bis 14, **dadurch gekennzeichnet, dass** sich das streuende Material ($202^2$) wenigstens über einen Teil der Dicke, vorzugsweise über die gesamte Dicke des optischen Leiters erstreckt.

16. Optischer Leiter (2; 102; 202) nach einem der Ansprüche 1 bis 15, **dadurch gekennzeichnet, dass** die Reflexionsmittel auf der Reflexionsfläche vorzugsweise prismenförmige Mikrostrukturen (10; 110; 210) sind.

17. Optischer Leiter (2; 102; 202) nach Anspruch 16, **dadurch gekennzeichnet, dass** die Größe und/oder die Dichte der Mikrostrukturen (10; 110; 210) mit dem Abstand von der Eintrittszone ($6^1$, $106^1$, $206^1$) zunehmen, derart, dass die allmähliche Abnahme der durch die Mikrostrukturen hervorgerufenen Lichtbrechung kompensiert wird.

18. Optischer Leiter (2; 102; 202) nach einem der Ansprüche 1 bis 17, **dadurch gekennzeichnet, dass** sich die Reflexionszone ($8^1$, $108^1$, $208^1$) auf einer der beiden gegenüberliegenden Hauptflächen (4, 8; 104, 108; 204, 208) des Leiters (2; 102; 202), vorzugsweise auf der Hauptfläche (8; 108; 208) gegenüber jener (4; 104; 204) mit der Austrittszone ($4^1$, $104^1$, $204^1$), befindet.

19. Lichtsignalgebungsmodul, das einen optischen Lichtleiter und wenigstens eine Lichtquelle umfasst, **dadurch gekennzeichnet, dass** der optische Leiter (2; 102; 202) ein Leiter nach einem der Ansprüche 1 bis 18 ist.

**Claims**

1. Optical light guide (2; 102; 202) made of transparent or translucent material, of generally extended form with two opposing main faces (4, 8; 104, 108; 204, 208), and comprising:

   - a light input zone ($6^1$; $106^1$; $206^1$);
   - a light output zone ($4^1$; $104^1$; $204^1$) on one of the two opposing main faces;
   - a reflection zone ($8^1$; $108^1$; $208^1$) with means (10; 110; 210) for reflecting the light towards the output zone ($4^1$; $104^1$; $204^1$);

**characterized in that** it comprises, in addition:

   means ($4^2$; $8^2$; $104^2$; $204^2$) for dispersing the light within the guide, said means being situated between the input zone ($6^1$; $106^1$; $206^1$) and the output ($4^1$; $104^1$; $204^1$) and reflection ($8^1$; $108^1$; $208^1$) zones,
   the dispersion means comprising splines ($4^2$, $8^2$) extending over at least one of the main faces (4, 8), transversely to the main direction of the light rays from the input zone ($6^1$) to the output ($4^1$) and reflection ($8^1$) zones.

2. Optical guide (2; 102; 202) according to Claim 1, **characterized in that** the dispersion means ($4^2$; $8^2$; $104^2$; $204^2$) extend transversely to the general direction of the light rays being propagated from the input zone ($6^1$; $106^1$; $206^1$) to the output zone ($4^1$; $104^1$; $204^1$) and/or the reflection zone ($8^1$; $108^1$; $208^1$).

3. Optical guide (2; 102; 202) according to Claim 2, **characterized in that** the dispersion means ($4^2$; $8^2$; $104^2$; $204^2$) extend transversely so as to generate an effect of dispersion of the rays over more than 80%, preferentially more than 90%, of the height, according to the thickness of the guide, of the output zone ($4^1$; $104^1$; $204^1$) and/or of the reflection zone ($8^1$; $108^1$; $208^1$).

4. Optical guide (2; 102; 202) according to one of Claims 1 to 3, **characterized in that** the dispersion means ($4^2$; $8^2$; $104^2$; $204^2$) are at a distance of less than 20 mm, preferentially 10 mm, more preferentially 5 mm, from the input zone ($6^1$; $106^1$; $206^1$).

5. Optical guide (2; 102; 202) according to one of Claims 1 to 4, **characterized in that** the input zone ($6^1$; $106^1$; $206^1$) is on a lateral face (6; 106; 206) of the guide, the dispersion means ($4^2$; $8^2$; $104^2$; $204^2$) extending parallel to said face.

6. Optical guide (2; 102; 202) according to one of Claims 1 to 5, **characterized in that** the dispersion means ($4^2$; $8^2$; $104^2$; $204^2$) are at a distance from the output zone ($4^1$; $104^1$; $204^1$) and/or from the reflection zone ($8^1$; $108^1$; $208^1$).

7. Optical guide (2; 102; 202) according to one of Claims 1 to 6, **characterized in that** the dispersion means ($4^2$; $8^2$; $104^2$; $204^2$) are made of a piece with the transparent or translucent material of the guide.

8. Optical guide (2) according to one of Claims 1 to 7, **characterized in that** the splines ($4^2$, $8^2$) have an average radius *R* and are adjacent with an average pitch *P*, and **in that** $P \leq R \leq 10 \times P$, preferentially $1.5 \times P \leq R \leq 5 \times P$.

9. Optical guide (2) according to one of Claims 1 to 8, **characterized in that** the or at least one of the splines ($4^2$, $8^2$) closest to the input zone ($6^1$) is at a distance from said zone which is less than 20 mm, preferentially 10 mm, more preferentially 5 mm.

10. Optical guide (2) according to one of Claims 1 to 9, **characterized in that** the number of splines ($4^2$, $8^2$) is 5 or more, preferentially 10 or more, more preferentially 15 or more, on at least one of the main faces (4, 8) of the guide.

11. Optical guide (202) according to one of Claims 1 to 10, **characterized in that** the guide comprises, between the opposing main faces, on the reflection zone ($208^1$) and/or the output zone ($204^1$), a diffusing material ($202^2$) that is also distinct from the material ($202^1$) forming the guide from the input zone ($206^1$) to the output zone ($204^1$) and/or the reflection zone ($208^1$).

12. Optical guide (202) according to Claim 11, **characterized in that** the diffusing material ($202^2$) has a haze value according to the ASTM D1003 standard which is equal to or greater than 0.5%, preferentially 1%, more preferentially 1.5%.

13. Optical guide (202) according to one of Claims 11 and 12, **characterized in that** the material ($202^1$) forming the guide from the input zone ($206^1$) to the output zone ($204^1$) and/or the reflection zone ($208^1$) has a haze value according to the ASTM D1003 standard which is equal to or less than 0.5%.

14. Optical guide (202) according to one of Claims 11 to 13, **characterized in that** the diffusing material ($202^2$) extends, preferentially continuously, over most, preferentially all, of the reflection zone ($208^1$) and/or the output zone ($204^1$).

15. Optical guide (202) according to one of Claims 11 to 14, **characterized in that** the diffusing material ($202^2$) extends over at least a part, preferentially over all, of the thickness of the optical guide.

16. Optical guide (2; 102; 202) according to one of Claims 1 to 15, **characterized in that** the reflection means on the reflection face are microstructures (10; 110; 210), preferentially prismatic.

17. Optical guide (2; 102; 202) according to Claim 16, **characterized in that** the size and/or the density of the microstructures (10; 110; 210) increase with the distance from the input zone ($6^1$; $106^1$; $206^1$) so as to offset the gradual reduction of the light power provoked by the microstructures.

18. Optical guide (2; 102; 202) according to one of Claims 1 to 17, **characterized in that** the reflection zone ($8^1$; $108^1$; $208^1$) is situated on one of the two opposing main faces (4, 8; 104, 108; 204, 208) of said guide (2; 102; 202), preferentially on the main face (8; 108; 208) opposite that (4; 104; 204) with the output zone ($4^1$; $104^1$; $204^1$).

19. Light signalling module, comprising an optical light guide and at least one light source, **characterized in that** the optical guide (2; 102; 202) is a guide according to one of Claims 1 to 18.

**Fig. 1**

**Fig. 2**

**Fig. 3**

**Fig. 4**

**Fig. 5**

**Fig. 6**

**Fig. 7**

**EP 3 217 080 B1**

## RÉFÉRENCES CITÉES DANS LA DESCRIPTION

### Documents brevets cités dans la description

- US 20140177278 A1